# EUROPEAN PATENT SPECIFICATION

(11) **EP 1 978 067 B1**
(45) Date of publication and mention of the grant of the patent: **17.02.2010**
(21) Application number: 07006877.0
(22) Date of filing: 02.04.2007
(51) Int. Cl.: C09J 7/02, B05D 7/24

(54) **Release Liner**
Trennschicht
Feuille antiadhésive

(43) Date of publication of application: 08.10.2008
(73) Proprietor: NITTO EUROPE N.V, 3600 Genk (BE)
(72) Inventor: Eevers, Walter c/o Nitto Europe N.V., 2600 Genk (BE); Issaris, Anne c/o Nitto Europe N.V., 2600 Genk (BE); Wasbauer, Ingrid c/o Nitto Europe N.V., 2600 Genk (BE); Dubreuil, Marjorie Flemish Institute for Tech., 2400 Mol (BE); Vangeneugden, Dirk, 2400 Mol (BE)
(74) Representative: Grünecker, Kinkeldey, Stockmair & Schwanhäusser Anwaltssozietät

(56) References cited:
- EP-A2- 1 129 791
- WO-A-02/28548
- WO-A-03/095578

## Description

### Technical Field

The present invention to a release liner for use in a pressure-sensitive adhesive sheet comprising a release layer on a substrate.

### Background art

Release liners are employed in various technical fields. They are suitable for a variety of applications, such as in the assembly of aircrafts, automobiles, medical devices, and all types of electronic products. Others are used in construction and building applications. Specifically silicone release liner are used in surgical drapes, wound care dressings, and other medical devices.

Release liners are commonly paper or plastic film materials with specialized, non-stick coatings for adhesive tapes, sealants, composite handling, dispensing and processing applications. There are many types of release liners, including silicone release liners, tape release liners, polyester release liners, and corrugated release liners.

A silicone release liner has a silicon coating on both sides to ensure that the tape unwinds easily and can be laminated to various substrates. A tape release liner is generally used for automated and high speed processes. A polyester release liner provides high dimensional stability and does not expand like polypropylene films. A corrugated release liner can be used to develop a film on a transparent PVC tape. Release liners and films in addition to the above described liners are of course available and may be selected depending on the desired application..

In the field of pressure sensitive adhesives, release liners are generally used as a carrier sheet to protect the adhesive during transport and storage, and through various converting and assembly processes until time of use of the adhesive. Common release liners have a coating applied to a substrate to allow the adhesive to release easily. Such pressure sensitive adhesives are excessively used in, for example, the label industry, in the automotive industry and in chip manufacture processes.

The release coating is usually an apolar layer which enables the user to easily unwind a roll of a pressure sensitive adhesive, and to easily remove a protective sheet from an adhesive layer prior to use.

Up to date, wax or silicone coatings are commonly used as apolar release layers in pressure sensitive adhesive applications. However, both materials when applied to a substrate as suggested in the prior art, disadvantageously have the tendency to migrate over time from the release layer into the contacting adhesive layer while wound on a roll. The thus formed thin layer of transferred silicone or wax material on the adhesive causes problems during application of the pressure sensitive adhesive, especially in the semiconductor industry or automotive industry.

Fluorocarbons are also used as alternative apolar coatings of release liners. However, the cost of the materials as well as their disadvantageous environmental impact make fluorocarbons less appealing.

Various processes for producing the above release layers have been suggested in the prior art, such as solvent or water based wet-chemical coating, or UV curable silicones. In order to reduce the migration of release material to the adhesive layer over time, it has been proposed to employ wax and silicone polymers with a high molecular weight.

Such high molecular weight polymers can only be smoothly coated as a diluted solution due to their high viscosity. Therefore, a large amount of organic solvent is required during the production of the release liner in order to obtain a thin release layer with a reduced amount of transferred release material to the adhesive layer. The excessive use of organic solvent is however disadvantageous in view of the overall costs, the working safety as well as from an environmental point of view.

Alternatively, water based silicone coatings may be employed in order to avoid the use of organic solvents. However, water based coatings disadvantageously have the tendency to penetrate the substrate, resulting in decreased gloss of the cured coating and reduced release properties as compared to solvent based coatings of the same weight.

UV curable silicone systems are in principle solvent free systems. Since coatings are obtained without adding any solvent, the molecular weight of the silicone compounds is much lower. To reduce the migration into the adhesive, the applied coating is crosslinked by UV radiation, which results in a very hard coating. While this is unproblematic for hard substrate materials like paper or polyester films, the elongation of the base material cannot be matched in case of flexible plastics like PVC. If flexible substrates are bend or deformed during application, for example to match the shape of the adherent, the hardened UV cured silicone system cannot be elongated to the same extend and will be damaged, or in the worst case, break during elongation.

Furthermore, the thickness of the coated layer of UV curable silicones is much higher than the layer thickness of solvent based systems. The higher thickness is required since due to the high viscosity of the materials, pits may occur if the thickness of the layer is too low.

One process employed for the application of release coatings on a substrate is to subject the surface to a low-pressure plasma treatment. A polymerizable precursor (also referred to as a "monomer") for the coating is introduced into a plasma discharge, where polymerization takes place to form a polymer coating on the substrate. However, apparatuses for reducing pressure are complex and expensive and thus add to the overall costs of the final product. Further, in case the substrate to be coated is large, or the substrate material exhibits high water absorption properties, the time to generate the reduced pressure inside the apparatus also becomes an issue, in return raising the overall costs.

As an alternative, atmospheric-pressure plasma processes have been suggested for the cleaning or activation of surfaces. By introducing the monomers for forming a release layer into the plasma atmosphere, durable layers may be obtained which change the properties of the substrate permanently. In this way, the adhesion of a substrate surface can be increased, or the release properties of a substrate surface can be increased, as desired. Advantageously, no reduced pressure in the vessel is required, making the process more cost effective.

Suitable materials for introducing hydrophobic or release properties employing an atmospheric pressure plasma process which have been suggested up to date include siloxanes, silanes, fluorocarbons, and chlorocarbons.

However, also when an atmospheric pressure plasma process is used, depending on the type of materials and process parameters, coating instability can be a problem. Coating instability can occur when a polymerizable pre-cursor is deposited on a surface but not fully converted during plasma coating.

EP-A-1129791 describes release liners obtainable by a process comprising low pressure plasma discharge.

JP-A-9241409 discloses hydrophobic surfaces being obtained by treating a substrate surface with electric discharge plasma in near atmospheric pressure. A specifically mixed gas comprises fluorinated compounds having an unsaturated bond and an inert gas, such as helium. Successively, electron beam or vacuum ultraviolet ray irradiation in vacuum is used to treat the surface of the substrate.

JP-A-2001255625 discloses the production of hydrophobic layers on surfaces using mainly fluorohydrocarbons in a discharge plasma in a He or Ar atmosphere. Due to the surface treatment the support surface does not peel from a silver halide photosensitive layer even under cutting energy.

EP-A-1326718 discloses a process for forming a coating on a substrate, comprising the introduction of an atomised liquid and/or solid coating-forming material into a homogeneous atmospheric pressure plasma glow discharge. Suitable coatings for increasing the hydrophobicity of the treated surface include halo-functional silica- and siloxane-based materials.

US-A-6,126,776 relates to a process for modifying the surface of a solid polymer substrate comprising the use of acrylic compounds like cyanoacrylate and/or isocyanates as vapour in a plasma reactor. Plasma treatment is combined with UV pre- or post-treatment, simultaneously. Due to the surface modification, the binding force of a polymer substrate to an organic binder material is improved.

WO-A-2004019381 discloses a coating process based on the vaporisation of silicone-like compounds, halogen-carbon compounds and organo-metallic complexes in a glow discharge plasma treatment.

In view of the disadvantages of the release liners of the prior art up to date is was the object of the present invention to provide an improved release liner reducing or eliminating the migration of release material into the adjacent layer in contact with the liner.

### Summary of the invention

The above object is achieved by a release liner for use in a pressure-sensitive adhesive sheet comprising a release layer on a substrate, wherein the release liner is obtainable by a process comprising the steps of:
- (1) providing a substrate;
- (2) producing an atmospheric pressure plasma discharge in the presence of a gas;
- (3) exposing the substrate to said atmospheric pressure plasma discharge;
- (4) introducing a liquid aerosol comprising a precursor into said atmospheric pressure plasma discharge, thereby forming a release layer on the substrate; and
- (5) curing the release layer on the substrate.

The present invention furthermore relates to the use of said release liner for adhesive sheets, especially pressure sensitive adhesive sheets.

Preferred embodiments are set forth in the subclaims.

### Brief description of the drawing

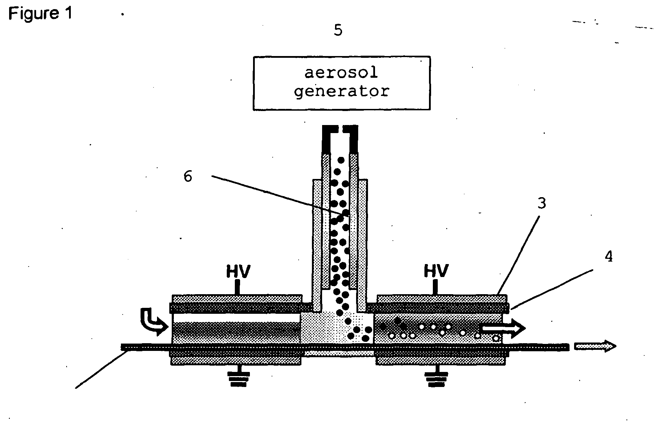

Figure 1 illustrates an apparatus suitable for the production of a release liner of the present invention.

### Detailed description of the invention

The release liner in accordance with the present invention is obtainable by a specific process, i.e. an atmospheric pressure plasma process. "Atmospheric" in the sense of the present invention means that the process is carried out under atmospheric pressure and no pressure reduction is needed at all, which is particularly advantageous in industrial processes.

In the process, the compounds are introduced into a plasma discharge and chemically active species, such as radicals, ions and molecules in an excited state, are formed. These active species react with each other, with neutral molecules contained in the plasma or with the substrate surface, resulting in surface modification and/or deposition of a film thereon.

In the first step of preparing the release liner of the present invention, a substrate is provided. Due to the process involving contacting the substrate with plasma, suitable substrates do not require to have a flat surface but may have various forms. Thus, the substrate is not limited to flat films but may be in a bend shape or even have a more complex structure as long as the surface to be treated can be contacted by the plasma. For example, the substrate may be a planar or curves plate, have the form of a grid, bar, cylinder, or a knife or brush type geometry, but is not limited thereto.

In the second step of preparing the release liner of the present invention, an atmospheric pressure plasma discharge in the presence of a gas is produced.

As the gas for the atmospheric pressure plasma discharge, nitrogen, carbon dioxide, helium, argon, oxygen, nitrogen oxides, or mixtures thereof may be used.

In the third step of preparing the release liner, the substrate surface is brought into contact with the generated electric discharge plasma.

During said step, radical formation on the surface of the substrate creates active sites to improve the binding force between the substrate and the release layer material to be applied, which in turn results in the desired release properties of the finally obtained release layer.

The frequency during the step of exposing the substrate is preferably between 1 and 100 kHz, more preferably between 1 and 50 kHz, and most preferably between 1 and 5 kHz. The gas flow is between about 5 and 100 standard liter per minute (slm) preferably between 10 and 60 slm.

The exposure time depends on the chosen substrate, and is generally from a few seconds up to a few minutes. The power during the activation is 2W/cm² or below.

Afterwards, the release layer forming material (in the following also referred to as a "precursor") is introduced as a liquid aerosol into said atmospheric pressure plasma discharge, thereby forming a release layer on the substrate.

The frequency during the release layer forming step is preferably between 1 and 100 kHz, more preferably between 1 and 50 kHz, and most preferably between 1 and 5 kHz. The gas flow is between about 5 and 100 standard liter per minute (slm) preferably between 10 and 60 slm. The power employed during the release layer forming step is preferably 10 W/cm² or below, more preferably 2W/cm² or below, and most preferably between 0.1 and 0.3 W/cm².

Subsequently, the layer formed on the substrate is cured. Thereby, the stability of the release properties is improved by reacting remaining precursor fragments to enforce the existing polymer network.

The curing step is preferably carried out using ultraviolet radiation. The curing step has the additional advantage of converting unpolymerized precursor into polymer material, thereby stabilizing the release layer and prolonging the life time thereof. It is preferred to use UV radiation with wavelengths between 290 and 400 nm, more preferably 300 to 380 nm. The radiation dose is preferably in the range of 5 to 500mJ/cm² during a period from a few seconds to several minutes.

Alternatively, the curing step can be carried out at elevated temperatures, such as temperatures of 50°C or more. In this case, the curing time is from 5 minutes to 24 hours, preferably, 15 minutes to 12 hours, and more preferably 30 minutes to 6 hours.

Curing can also be achieved by radiation other than UV, for example by electron beam curing.

The above process can be performed in various types of installations. The atmospheric pressure plasma process may for example be carried out in a suitable plasma installation, such as an installation as described in WO2005/095007, after which the substrate is transferred to a UV-installation. The latter can be a UV conveyor, for example of the type AktiPrint T (Sadechaf Technologies).

The configuration of an apparatus suitable for the above described process generally comprises one or more sets of electrodes of which at least one is covered with an insulating dielectric material. Figure 1 schematically illustrates an apparatus suitable for the above process. A substrate (1) can be coated in a batch process, or, as illustrated in Figure 1, in a continuous process, depending on the shape of the substrate. In case of a continuous process, the coated substrate may exit the apparatus as indicated by the arrow, while uncoated substrate is continuously fed into the coating area. Of course, the continuous process is not limited to flat substrates as illustrated in Figure 1.

The apparatus further comprises an aerosol generator (5) for providing the compounds to be coated (6) as an aerosol into the coating area. The aerosol is brought into contact with at least one pair of electrodes (2, 3) to create the active species, which then react with the substrate. One or both electrodes may be temperature controlled and may be movable if desired. The apparatus may further comprise a parallel or serial combination of one or more of said electrodes.

As is also illustrated in Figure 1, the electrodes may comprise a dielectric layer (4) on top thereof in order to provide a more stable plasma. Preferably, said dielectric layer is formed from a thin glass layer or mica, with glass being more preferred.

Suitable materials for the substrate of the release liner of the present invention include plastic films, such as polyvinylchloride, polyethylene terephthalate, polybutylene terephthalate, acrylic resins, polyethylene, polypropylene, polystyrene and derivatives thereof, polycarbonate, or polyolefin copolymers, polyamide, polysulfone, poly(vinylidene fluoride), cellulose, polylactic acid, polycaprolactone, polycaprolactam, paper, non woven materials, non-woven fiber materials, and woven fiber materials, and cloths. Preferred are substrates selected from the group consisting of plastic films, paper, woven fiber materials, and non-woven fiber materials.

Suitable release layer precursor materials are polymerizable precursors, i.e. free-radical polymerizable compounds. Examples of suitable precursor materials include acrylates, methacrylates, styrene, alkenes and dienes, for example methyl (meth)acrylates, ethyl (meth)acrylates, propyl (meth)acrylates, butyl (meth)acrylates, and other alkyl (meth)acrylates, glycidyl (meth)acrylates, trimethoxysilyl propyl (meth)acrylates, allyl (meth)acrylates, dialkylaminoalkyl (meth)acrylates, and fluoroalkyl (meth)acrylates, α-methylstyrene, fluorinated alkenes, for example, perfluoroalkenes, ethylene, propylene, and butadiene; allyl compounds, such as allyl amine, allyl alcohol, alkenes and dienes; halogenated alkenes and fluorinated alkenes, for example perfluoroalkenes, ethylene, propylene, vinylidene halides, butadienes; alkyne compounds; and mixtures thereof.

The introduced precursor may also contain multi-functional polymerizable compounds to increase the crosslinking density and to enhance the coating's stability, such as dienes; multifunctional acrylates, such as 1,6-hexanediol diacrylate, pentaerythritol penta/hexa-acrylate, and trimethylolpropane ethoxylate triacrylate.

It is preferred that the precursor comprises at least an acrylic monomer. More preferably the acrylic monomer is an alkyl acrylate or alkyl methacrylate. Most preferred is the alkyl (meth)acrylate being selected from the group consisting of ethyl hexyl (meth)acrylate, stearyl (meth)acrylate, and mixtures thereof. Especially acrylic precursors do not exhibit release properties themselves. It has surprisingly been found that due to the use of the atmospheric pressure plasma discharge process, even acrylic monomers may be used for forming the release layer having release properties. This is especially advantageous since acrylic materials are tolerable in applications in the automotive industry or semiconductor processes, where residues derived from silicone-containing materials forming the release layer may cause various problems as outlined further above.

Furthermore, a photoinitiator may be mixed with the precursor and applied to the substrate to enhance the reactivity. Examples of photoinitiators which can be activated by plasma discharge include free-radical photoinitiators, photolatent acids and photolatent bases. Specific examples of free-radical photoinitiators include camphorquinone, benzophenone and derivatives thereof, acetophenone, and also acetophenone derivatives, for example α-hydroxyacetophenones, such as α-hydroxycycloalkylphenyl ketones, especially (1-hydroxycyclohexyl)-phenyl ketone, or 2-hydroxy-2-methyl-1-phenyl-propanone; dialkoxyacetophenones, such as 2,2-dimethoxy-1,2-diphenylethan-1-one; or α-aminoacetophenones, such as (4-methylthiobenzoyl)-1-methyl-1-morpholino-ethane, (4-morpholino-benzoyl)-1-benzyl-1-dimethylamino-propane;4-aroyl-1,3-dioxolanes; benzoin alkyl ethers and benzil ketals, such as benzil dimethyl ketal; phenylglyoxalates and derivatives thereof, such as dimeric phenyl- glyoxalates, siloxane-modified phenyl glyoxalates; peresters, such as benzophenonetetra- carboxylic acid peresters, monoacylphosphine oxides, such as (2,4,6-trimethylbenzoyl)-phenyl-phosphine oxide; bisacylphosphine oxides, such as bis (2,6-dimethoxybenzoyl)- (2,4,4-trimethyl-pent-1-yl) phosphine oxide, bis (2,4, 6-trimethyl- benzoyl)-phenyl-phosphine oxide or bis (2,4,6-trimethylbenzoyl)-(2,4-dipentyloxyphenyl)- phosphine oxide; trisacylphosphine oxides; halomethyltriazines, such as 2-[2-(4-methoxy-phenyl)-vinyl]-4,6-bis-trichloromethyl-[1,3,5]triazine, 2-(4-methoxy-phenyl)-4,6-bis-trichloro-methyl-[1,3,5]triazine,2-(3,4-dimethoxy-phenyl)-4, 6-bis-trichloromethyl-[1,3,5] triazine, 2-methyl-4, 6-bis-trichloromethyl-[1,3,5]triazine.

It is furthermore preferred that the release layer does not comprise silicone containing compounds. It is also preferred that the release layer does not comprise halogen containing compounds. The release liner not containing any silicone or halogen containing compounds is a benefit for several applications like in the automotive and semiconductor market. Applications especially in the field of semiconductor manufacture experience problems with silicone residues on substrates after the release liner has been removed. Said silicone residues are subsequently transferred on a silicon chip, which in turn causes processing problems during the embedding of the chip. Up to date, about 85% of the release liners used in chip manufacture are silicone-based.

The working temperature used in the invention is in a range in which plastics like polyvinylchloride, polyethylene terephthalate, acrylic resins, polyethylene, polypropylene, polystyrene, polycarbonate, paper or woven cloth can be used as substrates without damaging these materials.

Advantageously, by using an atmospheric pressure plasma process, the process of producing the release liner of the present invention can easily be carried out in a roll to roll set up for industrial application, which is in contrast to the low pressure plasma process where a vacuum chamber is required, which leads to higher costs due to the more complex equipment as well as the labor cost.

The release liner of the present invention is preferably used for adhesive sheets and tapes. Due to the specific release properties of the release liner, the migration of any release material from the release layer to the adjacent layer is drastically reduced or eliminated. Thus, any problems arising from residue derived from the release layer in the manufacturing processes wherein the adhesive is employed are minimized. Preferably, the adhesive sheet or tape is a pressure sensitive adhesive sheet or tape.

One advantage of the release liner of the present invention, as compared to the release liners of the prior art, is that it is obtainable via a dry -or solvent free - coating process for release layers. Thereby, the use of organic solvents is effectively avoided, improving the working environmental safety and reducing the overall costs of the release liner. Additionally, the disadvantages in connection with water-based manufacturing processes can be avoided.

The release properties towards a pressure sensitive adhesive can be finetuned by changing the activation process, the plasma treatment process parameters, the chemical composition of the precursor or precursor mixture, the carrier gas and the UV post curing exposure.

In the following, the invention will be illustrated by Examples. The invention is however not limited thereto.

### Examples

The release properties of the release liners were measured as follows:
- Test method for the initial release value

For the sample preparation, the test tapes of 20 mm width and a length of +/-20 cm were applied to the plasma treated liner with a 2 kg rubber-coated steel roll at a speed of 5 mm/sec (one time go and back). The test frequency was two measurements per sample.

Test equipment:
- test room at 23° ± 2°C, 50 ± 5 % relative air humidity;
- Dynamometer (speed 300 mm/min);
- 2kg rubber coated steel roll.
- Test fixture for measuring the release value:

The applied substrates were left at room temperature for 30 minutes before testing. The samples were put in the fixture in such a way that the tapes were straight and tied. The substrates were positioned in the lower clamp, the tapes in the moving clamp.

The release values of the tapes to the substrates were measured by means of the dynamometer (with an average value over a pathway of 10 cm, while holding the tape under an angle of 45°C. The measured values are indicated in cN/50 mm.
- Test method of the release value after ageing

For the sample preparation, the test tapes of 20 mm width and a length of +/-20 cm were applied to the plasma treated liner with a 2 kg rubber-coated steel roll at a speed of 5 mm/sec (one time go and back). The test frequency was two measurements per sample.

### Test equipment:

- test room at 23° ± 2°C, 50 ± 5 % relative air humidity;
- a standard oven at about 60°C;
- Dynamometer (speed 300 mm/min);
- 2 kg rubber coated steel roll.
- Test fixture for measuring the release value

The applied substrates were left for 24 hours at 60°C and were cooled down at room temperature for 30 minutes before testing. The samples were put in the fixture in such a way that the tapes were straight and tied. The substrates were in the lower clamps, the tapes in the moving clamp.

The release values of the tapes to the substrates were measured by means of the dynamometer (average value over a pathway of 10 cm) while holding the tapes under an angle of 45°C. The measured values are indicated in cN/50 mm

### Example 1

### - Application of a release liner formed from ethyl hexylacrylate

The plasma treatment is carried out in a specially designed parallel plates installation at 1.5 kHz. A sheet of poly(vinylchloride) of 20x30 cm² is placed on the lower electrode of the installation. The activation step is carried out under nitrogen at a flow of 40 slm, at a power of 400 W and a speed of 10 m/min. The power is lowered to 80 W and ethyl hexylacrylate is injected in form of an aerosol into the plasma zone under a nitrogen flow of 20 slm. The coating deposition is carried out during 40 seconds. The coated substrate is then subjected to UVA radiation at a power of 120 mJ/cm².

The measured release value of the obtained release liner after 30 minutes application with a test tape was found to be 20 cN/ 20 mm. For comparison, the release value of the PVC sheet without treatment was measured to be 369 cN/20 mm.

After an application time of 24 h, in which the treated sample and the test tape applied to it were conditioned at 60°C, the tape could still be removed and the release value (after ageing) was measured to be 285 cN/ 20 mm. For comparison, the corresponding release value of the untreated PVC could not be measured due to the adhesion between the substrate and the test tape being so high that both were destroyed when an attempt to separate them from each other was made.

### Example 2

### - Application of a release liner formed from a mixture of ethyl hexylacrylate and pentaerythritol penta/hexaacrylate

As described in Example 1, the plasma treatment is carried out in a specially designed parallel plates installation at 1.5 kHz. A sheet of poly(vinylchloride) of 20x30 cm² is placed on the lower electrode of the installation. The activation step is carried out under nitrogen at a flow of 40 slm, at a power of 400 W and a speed of 10 m/min. The power is lowered to 100 W and a mixture of ethyl hexylacrylate (90 wt%) and pentaerythritol penta/hexaacrylate (10 wt) is injected in form of an aerosol into the plasma zone under a nitrogen flow of 10 slm. The coating deposition is carried out during 1 minute. The coated substrate is then subjected to UVA radiation at a power of 120 mJ/cm².

The measured release value of the obtained release liner after 30 minutes application with a test tape was found to be 27 cN/20 mm. For comparison, the release value of the PVC sheet without treatment was measured to be 369 cN/20 mm.

After an application time of 24 h, in which the treated sample and the test tape applied to it were conditioned at 60°C, the tape could still be removed and the release value (after ageing) was measured to be 33 cN/20 mm. For comparison, the corresponding release value of the untreated PVC could not be measured due to the adhesion between the substrate and the test tape being so high that both were destroyed when an attempt to separate them from each other was made.

### Example 3

### - Application of a release liner formed from ethyl hexylacrylate

As described in Example 1, the plasma treatment is carried out in a specially designed parallel plates installation at 1.5 kHz. A sheet of poly(ethylene terephthalate) of 20x30cm² is placed on the lower electrode of the installation. The activation step is carried out under nitrogen at a flow of 40 slm, at a power of 400 W and a speed of 10 m/min. The power is lowered to 100 W and ethyl hexylacrylate is injected in form of an aerosol in the plasma zone under a nitrogen flow of 10 slm. The coating deposition is carried out during 20 seconds. The coated substrate is then subjected to UVA radiation at a power of 120 mJ/cm².

The measured release value of the obtained release liner after 30 minutes application with a test tape was found to be 14 cN/20 mm. For comparison, the release value of the PET sheet without treatment was measured to be 80 cN/ 20mm.

After an application time of 24 h, in which the treated sample and the test tape applied to it were conditioned at 60°C, the tape could still be removed and the release value (after ageing) was measured to be 50 cN/ 20 mm. For comparison, the corresponding release value of the untreated PET was measured to be 210 cN/20 mm.

As is evident from the Examples, the release liners of the present invention exhibit excellent release properties, both initially and after ageing. The release liners have an excellent storage ability while the release properties are not deteriorated over time.
By contrast, the untreated substrates were found to have poor initial release properties and were found to be unusable after ageing, indicating poor storage abilities.

## Claims

1. A release liner for use in a pressure-sensitive adhesive sheet, comprising a release layer on a substrate, wherein the release liner is obtainable by a process comprising the steps of:
- (1) providing a substrate;
- (2) producing an atmospheric pressure plasma discharge in the presence of a gas;
- (3) exposing the substrate to said atmospheric pressure plasma discharge;
- (4) introducing a liquid aerosol comprising a precursor into said atmospheric pressure plasma discharge, thereby forming a release layer on the substrate; and
- (5) curing the release layer on the substrate.

2. The release liner for use in a pressure-sensitive adhesive sheet according to claim 1, wherein the substrate is selected from the group consisting of plastic films, paper, woven fiber materials, and non-woven fiber materials.

3. The release liner for use in a pressure-sensitive adhesive sheet according to claim 1, wherein the precursor comprises an acrylic monomer.

4. The release liner for use in a pressure-sensitive adhesive sheet according to claim 3, wherein the acrylic monomer is selected from the group consisting of ethyl hexyl (meth)acrylate, stearyl (meth)acrylate, and mixtures thereof.

5. The release liner for use in a pressure-sensitive adhesive sheet according to claim 1, wherein the release layer does not comprise a silicone containing compound.

6. The release liner for use in a pressure-sensitive adhesive sheet according to claim 1, wherein the release layer does not comprise a halogen containing compound.

7. An adhesive sheet or tape comprising an adhesive layer and the release liner of any of claims 1 to 6.

8. The adhesive sheet or tape of claim 7, wherein the sheet or tape is a pressure-sensitive adhesive tape.

9. Use of the release liner of claim 1 for an adhesive sheet or tape.

## Patentansprüche

1. Trennliner zur Verwendung in einer Haftklebefolie, umfassend eine Trennschicht auf einem Substrat, wobei der Trennliner erhältlich ist durch ein Verfahren umfassend die Schritte:
- (1) Bereitstellen eines Substrats;
- (2) Erzeugen einer Plasmaentladung bei Atmosphärendruck in Gegenwart eines Gases;
- (3) Aussetzen des Substrats der Plasmaentladung bei Atmosphärendruck;
- (4) Einbringen eines Flüssigkeitsaerosols, das eine Vorstufe umfasst, in die Plasmaentladung bei Atmosphärendruck, wodurch eine Trennschicht auf dem Substrat gebildet wird; und
- (5) Härten der Trennschicht auf dem Substrat.

2. Trennliner zur Verwendung in einer Haftklebefolie nach Anspruch 1, wobei das Substrat ausgewählt ist aus der Gruppe bestehend aus Kunststofffolien, Papier, gewebten Fasermaterialien und Faservliesmaterialien.

3. Trennliner zur Verwendung in einer Haftklebefolie nach Anspruch 1, wobei die Vorstufe ein Acrylmonomer umfasst.

4. Trennliner zur Verwendung in einer Haftklebefolie nach Anspruch 3, wobei das Acrylmonomer ausgewählt ist aus der Gruppe bestehend aus Ethylhexyl(meth)acrylat, Stearyl(meth)acrylat und Mischungen davon.

5. Trennliner zur Verwendung in einer Haftklebefolie nach Anspruch 1, wobei die Trennschicht keine Silicon enthaltende Verbindung umfasst.

6. Trennliner zur Verwendung in einer Haftklebefolie nach Anspruch 1, wobei die Trennschicht keine Halogen enthaltende Verbindung umfasst.

7. Klebefolie oder Klebeband umfassend eine Klebstoffschicht und den Trennliner nach einem der Ansprüche 1 bis 6.

8. Klebefolie oder Klebeband nach Anspruch 7, wobei die Folie oder das Band ein Haftklebeband ist.

9. Verwendung des Trennliners nach Anspruch 1 für eine Klebefolie oder ein Klebeband.

## Revendications

1. Revêtement antiadhésif pour une utilisation dans une feuille adhésive sensible à la pression, comprenant une couche antiadhésive sur un substrat, lequel revêtement antiadhésif peut être obtenu par un procédé comprenant les étapes consistant à :
(1) se procurer un substrat :
(2) produire une décharge de plasma sous la pression atmosphérique en présence d'un gaz ;
(3) exposer le substrat à ladite décharge de plasma sous la pression atmosphérique ;
(4) introduire un aérosol liquide comprenant un précurseur dans ladite décharge de plasma sous la pression atmosphérique, en formant ainsi une couche antiadhésive sur le substrat ; et
(5) durcir la couche antiadhésive sur le substrat.

2. Revêtement antiadhésif pour une utilisation dans une feuille adhésive sensible à la pression selon la revendication 1, dans lequel le substrat est choisi dans l'ensemble constitué par les films plastiques, le papier, les matériaux en fibres tissées, et les matériaux en fibres non-tissées.

3. Revêtement antiadhésif pour une utilisation dans une feuille adhésive sensible à la pression selon la revendication 1, dans lequel le précurseur comprend un monomère acrylique.

4. Revêtement antiadhésif pour une utilisation dans une feuille adhésive sensible à la pression selon la revendication 3, dans lequel le monomère acrylique est choisi dans l'ensemble constitué par le (méth)acrylate d'éthylhexyle, le (méth)acrylate de stéaryle, et leurs mélanges.

5. Revêtement antiadhésif pour une utilisation dans une feuille adhésive sensible à la pression selon la revendication 1, dans lequel la couche antiadhésive ne comprend pas de composé contenant un silicone.

6. Revêtement antiadhésif pour une utilisation dans une feuille adhésive sensible à la pression selon la revendication 1, dans lequel la couche antiadhésive ne comprend pas de composé halogéné.

7. Feuille ou bande adhésive comprenant une couche adhésive et le revêtement antiadhésif de l'une quelconque des revendications 1 à 6.

8. Feuille ou bande adhésive selon la revendication 7, laquelle feuille ou bande est une bande adhésive sensible à la pression.

9. Utilisation du revêtement antiadhésif de la revendication 1 pour une feuille ou bande adhésive.
